Europäisches Patentamt

(19) European Patent Office

Office européen des brevets

(11) Publication number: **0 014 335**
**B2**

(12) # NEW EUROPEAN PATENT SPECIFICATION

(45) Date of publication of the new patent specification:
30.08.89

(51) Int. Cl.⁴: **B 23 K 35/02**, B 23 K 35/30

(21) Application number: 80100172.8

(22) Date of filing: 15.01.80

(54) Homogeneous ductile brazing foils.

(30) Priority: 01.02.79 US 8370
20.08.79 US 68266

(43) Date of publication of application:
20.08.80 Bulletin 80/17

(45) Publication of the grant of the patent:
22.06.83 Bulletin 83/25

(45) Mention of the opposition decision:
30.08.89 Bulletin 89/35

(84) Designated contracting states:
DE FR GB

(56) References cited:
FR—A— 2 374 128
US—A— 3 753 794
US—A— 3 786 854
US—A— 3 856 513
US—A— 4 148 973
WELDING JOURNAL, vol. 57, no. 7, July 1978, pages
33-38 Miami, U.S.A. N. De CRISTOFARO et al.: "Met-
glas Brazing Foil"
HEAT-TREATMENT ASPECTS OF METAL-JOINING
PROCESSES, Proceedings held in London, 8-9
December 1971, Iron and Steel Institute, 1972, pages
109-123 London, G.B. G.R. BELL: "Nickel-base alloys
for brazing and furnace surfacing"

(73) Proprietor: ALLIED CORPORATION
Columbia Road and Park Avenue P.O. Box 2245R
(Law Dept.)
Morristown New Jersey 07960 (US)

(72) Inventor: DeCristofaro, Nicholas John
114 Hillside Avenue
Chatham, New Jersey 07928 (US)
Inventor: Sexton, Peter
21 Samuelson Road
Weston, Connecticut 06883 (US)

(74) Representative: Collier, Jeremy Austin Grey et al
J.A.Kemp & Co. 14, South Square Gray's Inn
London WC1R 5EU (GB)

EP 0 014 335 B2

## Description

This invention relates to brazing process using a homogeneous, ductile brazing foil usehul in brazing stainless steels and high nickel alloys.

Brazing is a process for joining metal parts, often of dissimilar composition, to each other. Typically, a filler metal that has a melting point lower than that of the metal parts to be joined together is interposed between the metal parts to form a assembly. The assembly is then heated to a temperature sufficient to melt the filler metal. Upon cooling, a strong, corrosion resistant, leak-tight joint is formed.

As a class, stainless steel alloys are more difficult to braze than are carbon and low-alloy steels. This is apparently due to the high chromium content associated with stainless stells.

In FR-A-2374128 we describe homogeneous ductile brazing foils composed of metastable material having at least 50 percent glassy structure having a composition consisting essentially of 0 to 4 atom percent iron, 0 to 21 atom percent chronium, 0 to 16 atom percent boron, 0 to 12 atom percent silicon, 0 to 22 atom percent phosphorus and the balance essentially nickel and incidental impurities, the composition being such that the total of iron, chromium and nickel ranges from 76 to 84 atom percent and the total of boron, silicon and phosphorus constitutes the remainder, that is, 16 to 24 atom percent. These foils represent a substantial improvement over the previously known powdered and rolled foils, but have a thickness (0.0015 to 0.0025 inch or $3.81 \times 10^{-3}$ to $6.35 \times 10^{-3}$ cm) somewhat greater than that which has now been found to be required for maximum joint strength.

The present invention provides a brazing process which comprises interposing a filler metal, having a melting point lower than that of metal parts to be joined together, between the metal parts to form an assembly, heating the assembly to a temperature sufficient to melt the filler metal, and then cooling to provide a brazed joint between the metal parts, whereby there is used as the filler metal a single homogeneous, ductile brazing foil $1.27$ times $10^{-3}$ to $3.556$ times $10^{-3}$ cm (0.0005 to 0.0014 inch) thick and composed of metastable material having at least 50 percent glassy structure having a composition consisting essentially of 0 to 4 atom percent iron, 0 to 21 atom percent chromium, 0 to 19 atom percent boron excluding the range 0 to 16.2 atom percent, 0 to 12 atom percent silicon, 0 to 22 atom percent phosphorus and the balance essentially nickel and incidental impurities, wherein the composition is such that the total of iron, chromium and nickel is from 76 to less than 83.8 atom percent and the total of boron, phosphorus and silicon is from more than 16.2 to 24 atom percent.

The brazing foil used in the process is flexible, thin and homogeneous, and in use improves braze joint strength, enhances joining precision and reduces process time.

The homogeneous brazing foil if is fabricated by a process which comprises forming a melt of the composition and quenching the melt on a rotating quench wheel at a rate of at least $10^5$ °C/sec.

The foil is easily fabricable as homogeneous, ductile ribbon, which is useful for brazing as cast or which can be stamped into complex shapes to provide braze preforms. Use of the foil (or ribbon) of the invention eliminates the need for binders and pastes that would otherwise form voids and contaminating residues. Also, the filler material if enables alternative brazing processes of stainless steels, e.g. dip brazing in molten salts, to be employed.

The invention will be more fully understood and further advantages will become apparent when reference is made to the following detailed description of the preferred embodiments of the invention and the accompanying drawing, which is a graph showing the relationship between thickness and shear strength of a brazed joint prepared by the process.

As with the compositions described in FR-A-2374128, the compositions from which the foils are made are compatible with and more noble than stainless steels and are suitable for brazing austenitic, martensitic and ferritic stainless steels, as well as nickel base alloys.

By homogeneous is meant that the foil, as produced, is of substantially uniform composition, in all dimensions. By ductile is meant that the foil can be bent to a round radius as small as ten times the foil thickness without fracture.

The brazing temperature of the brazing process of the invention ranges from 925° to 1 205 °C (1 700° to 2 200 °F). The temperature of brazing is thus above the sensitizing temperature range of the 300 series stainless steels. This is in contrast to the brazing temperatures of silver brazing alloys, which fall within the sensitizing temperature range. As is well-known, when 18-8 stainless are heated at 510° to 790 °C (950° to 1 450 °F) for any appreciable length of time, they become sensitized or susceptible to intergranular corrosion. This is apparently due to the depletion of chromium in the grain-boundary areas. Sensitizing is thus avoided by the process of the invention.

The brazing foils are prepared by cooling a melt of the desired composition at a rate of at least $10^5$ °C/sec, employing metal alloy quenching techniques well-known to the glassy metal alloy art; see e.g. US-A-3,856,513 and 4,148,973. The purity of all compositions is that found in normal commercial practice.

A variety of techniques are available for fabricating continuous ribbon, wire, sheet, etc. Typically, a particular composition is selected, powders or granules of the requisite elements in the desired portions are melted and homogenized, and the molten alloy is rapidly quenched on a chill surface, such as a rapidly rotating metal cylinder.

Under these quenching conditions, a metastable, homogeneous, ductile material is obtained. The metastable material is a least 50% glassy, and there is no long range order. X-ray diffraction patterns of glassy metal alloys show only a diffuse halo, similar to that observed for inorganic oxide glasses. The glassy alloys must be at least 50% glassy to be sufficiently ductile to permit subsequent handling, such as stamping complex shapes from ribbons of the alloys. Preferably, the glass metal alloys are at least 80% glassy, and most preferably substantially (or totally) glassy, to attain superior ductility.

The brazing foil may be used in brazing applications as cast or may be heat treated to obtain a crystalline phase, preferably fine-grained, in order to promote longer die life when stamping of complex shapes is contemplated.

Foil thickness, and hence spacing, of $1.27 \times 10^{-3}$ cm to $3.556 \times 10^{-3}$ cm (0.0005 to 0.0014 inch) maximizes the strength of the braze joint.

## Examples

Ribbons 12.7 mm (0.5 inch) or 6.4 mm (0.25 inch) wide and 25 micrometers (0.001 inch) or 15 micrometers (0.0006 inch) thick were formed by squirting a melt of a composition by overpressure of argon onto a rapidly rotating copper chill wheel (surface speed 3000 to 6000 ft/min or 914.4 to 1828.8 m/min). Metastable homogeneous ribbons of substantially glassy alloy were produced. The composition was as follows :

|  | Fe | Ni | Cr | B | Si |
|---|---|---|---|---|---|
| weight % | 3.5 | 81.2 | 7.7 | 4.1 | 3.5 |
| atom % | 3 | 66 | 7 | 18 . | 6 |

## Example 1 (Comparative)

Test specimens were cut from 0.125 inch (0.32 cm) thick AISI 316SS strip. Brazing alloy ribbons 12.7 mm (0.5 inch) wide and 25 μm (0.001 inch) thick were used to braze two samples. Five layers of ribbon were stacked in the joint area. A joint spacer was used to set the final joint thickness at 127 μm (0.005 inch).

Lap shear test specimens were prepared as per AWS C3.2. The lap dimension was carefully controlled at 0.64 cm (0.25 inch) (2 × thickness of the base metal).

Brazing was done in a vacuum furnace. The furnace was evacuated to 0.13 Pa (0.1 micrometer Hg) and operated at 1 037.78 °C (1 900 °F) for 10 minutes.

Upon brazing, all shear specimens were subject to tensile shear testing with the following results :

| Metal | Braze filler | Joint shear strength, (psi) MPa | |
|---|---|---|---|
| | | Range | Avg. |
| 316SS | 5 ribbons | (13, 520—13,760) 93.15—94.81 | (13,640) 93.98 |

## Example 2 (Comparative)

12.7 mm (0.5 inch) Lap shear test specimens (three samples) were prepared as in Example 1 but stacking three layers of ribbon in the joint area and using a joint spacer to set the final joint thickness at 76 μm (0.003 inch).

Upon brazing, all shear specimens were subject to tensile shear testing with the following results :

| Metal | Braze filler | Joint shear strength, (psi) MPa | |
|---|---|---|---|
| | | Range | Avg. |
| 316SS | 3 ribbons | (12,700—15,520) 87.50—106.9 | (14,743) 101.58 |

## Example 3

A lap shear test specimen was prepared as in Example 1 but only one layer of ribbon was placed in the joint area and using a joint spacer to set the final joint tickness at 25 μm (0.001 inch).

Upon brazing, the shear specimen was subject to tensile shear testing with the following result :

3

| Metal | Braze filler | Joint shear strength, (psi) MPa |
|-------|--------------|--------------------------------|
| 316SS | 1 ribbon | (22,500)<br>155 |

## Example 4

Lap shear test specimens (three samples) were prepared as in Example 1 but only one layer of ribbon was placed in the joint area and using a joint spacer to set the final joint thickness at 13 μm (0.0005 inch). The excess filler metal formed a fillet around the joint.

Upon brazing, all shear specimens were subject to tensile shear testing with the following results :

| | | Joint shear strength, (psi) MPa | |
|-------|--------------|---------------|---------|
| Metal | Braze filler | Range | Avg. |
| 316SS | 1 ribbon | (31,680—36,320)<br>218.3—250.2 | (33,653)<br>231.87 |

## Example 5

Test specimens were cut from 0.125 inch (0.32 cm) thick AISI 316SS strip. Brazing alloy ribbons 0.64 cm (0.25 inch) wide and 15 μm (0.0006 inch) thick were used to braze four samples. One layer of ribbon was placed in the joint area. A joint spacer was not used. The final joint thickness was 15 μm (0.0006 inch).

Lap shear test specimens were prepared and brazed otherwise as in Example 1.

Upon brazing, all shear specimens were subject to tensile shear testing with the following results :

| | | Joint shear strength, (psi) MPa | |
|-------|--------------|---------------|---------|
| Metal | Braze filler | Range | Avg. |
| 316SS | 1 ribbon | (6,640—28,400)<br>45.75—195.6 | (14,740)<br>101.6 |

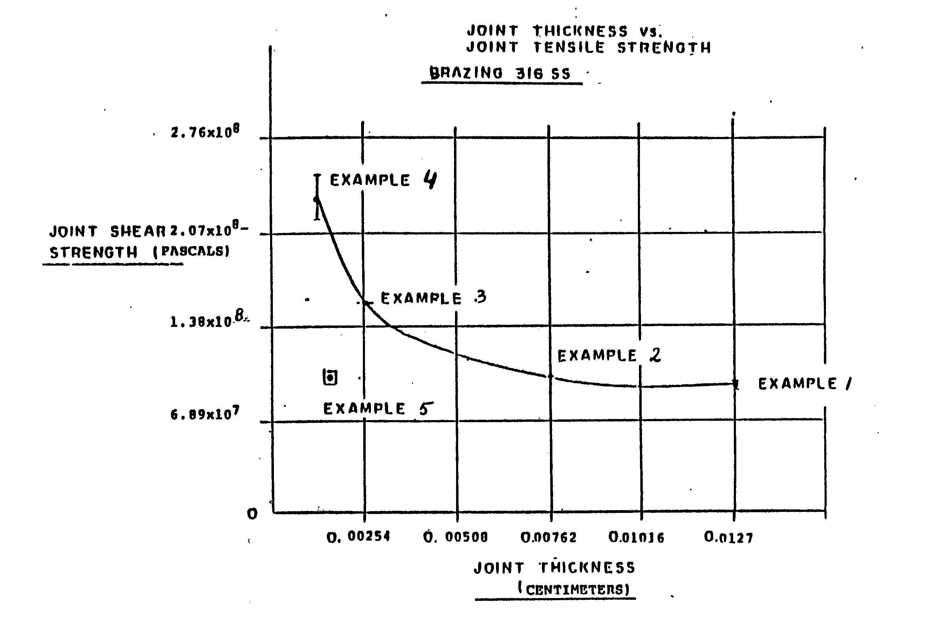

The data of Examples 1 to 4 demonstrate increased joint strength with decreasing thickness, provided that a sufficient amount of filler metal occupies the joint volume. This is illustrated in Figure 1. However, at small joint clearances, it becomes more difficult for the molten filler metal to adequately distribute itself throughout the entire joint. If an insufficient amount of filler metal is used, or if extensive flow of the filler metal is required, as in Example 5 where a thin filler metal foil was employed, joint strength will be reduced.

## Claim

A brazing process which comprises interposing a filler metal, having a melting point lower than that of metal parts to be joined together, between the metal parts to form an assembly, heating the assembly to a temperature sufficient to melt the filler metal, and then cooling to provide a brazed joint between the metal parts, whereby there is used as the filler metal a single homogeneous, ductile brazing foil 1.27 times $10^{-3}$ to 3.556 times $10^{-3}$ cm (0.0005 to 0.0014 inch) thick and composed of metastable material having at least 50 percent glassy structure having a composition consisting essentially of 0 to 4 atom percent iron, 0 to 21 atom percent chromium, 0 to 19 atom percent boron excluding the range 0 to 16.2 atom percent, 0 to 12 atom percent silicon, 0 to 22 atom percent phosphorus and the balance essentially nickel and incidental impurities, wherein the composition is such that the total of iron, chromium and nickel is from 76 to less than 83.8 atom percent and the total of boron, phosphorus and silicon is from more than 16.2 to 24 atom percent.

## Patentanspruch

Lötverfahren, bei dem ein Zusatzmetall mit einem Schmelzpunkt unter jenem von miteinander zu verbindenden Metallteilen zwischen den Metallteilen unter Bildung eines Zusammenbaus angeordnet wird, der Zusammenbau auf eine ausreichende Temperatur, um das Zusatzmetall zu schmelzen, erhitzt und dann gekühlt wird, um eine gelötete Verbindung zwischen den Metallteilen zu bekommen, wobei als das Zusatzmetall eine einzelne homogene duktile Lötfolie mit einer Dicke von 1,27 × $10^{-3}$ cm bis 3,556 × $10^{-3}$ cm (0,0005 bis 0,0014 inch) aus metastabilem Material mit einer zu wenigstens 50 % glasartigen Struktur verwendet wird, die eine Zusammensetzung hat, welche im wesentlichen aus 0 bis 4 Atom-% Eisen, 0 bis 21 Atom-% Chrom, 0 bis 19 Atom-% Bor unter Ausschluß des Bereiches von 0 bis 16,2 Atom-%, 0 bis 12 Atom-% Silicium, 0 bis 22 Atom-% Phosphor und als Rest im wesentlichen aus Nickel und gelegentlichen Verunreinigugen besteht, wobei die Zusammensetzung derart ist, daß die Gesamtheit von Eisen, Chrom und Nickel 76 bis weniger als 83,8 Atom-% beträgt und die Gesamtheit von Bor, Phosphor und Silicium mehr als 16,2 bis 24 Atom-% beträgt.

**Revendication**

Procédé de brasage qui comprend l'interposition d'un métal d'apport, ayant un point de fusion inférieur à celui des parties métalliques devant être assemblées, entre les parties métalliques de manière à former un assemblage, le chauffage de l'assemblage à une température suffisante pour faire fondre le métal d'apport, puis le refroidissement pour fournir un joint brasé entre les parties métalliques, d'où il résulte qu'on utilise comme métal d'apport un seul clinquant de brasage ductile, homogène, $1,27 \times 10^{-3}$ à $3,556 \times 10^{-3}$ cm d'épaisseur et constitué d'un matériau métastable ayant une structure au moins 50 % vitreuse ayant une composition constituée essentiellement de 0 à 4 atomes % de fer, de 0 à 21 atomes % de chrome, de 0 à 19 atomes % de bore à l'exclusion de la gamme 0 à 16,2 atomes %, de 0 à 12 atomes % de silicium, de 0 à 22 atomes % de phosphore, et le reste étant essentiellement constitué de nickel et des impuretés accidentelles, où la composition est telle que le total du fer, du chrome et du nickel est compris entre 76 et moins de 83,8 atomes % et le total du bore, du phosphore et du silicium est compris entre moins de 16,2 atomes % et 24 atomes %.

JOINT THICKNESS vs.
JOINT TENSILE STRENGTH

BRAZING 316 SS